# EUROPÄISCHE PATENTSCHRIFT

(11) **EP 3 126 564 B1**
(45) Veröffentlichungstag und Bekanntmachung des Hinweises auf die Patenterteilung: **08.05.2019**
(21) Anmeldenummer: 15712888.5
(22) Anmeldetag: 26.03.2015
(51) Int. Cl.: D06F 37/20, D06F 58/20, D06F 39/12, F16F 15/08, F25D 23/00

(54) **HAUSHALTSGERÄT UMFASSEND EIN AUF EINER EBENEN BASIS ANGEBRACHTES FUNKTIONSTEIL**
DOMESTIC APPLIANCE COMPRISING A FUNCTIONAL PART ATTACHED TO A FLAT BASE
APPAREIL MÉNAGER COMPRENANT UNE PARTIE FONCTIONNELLE MONTÉE SUR UNE BASE PLATE

(30) Priorität: 03.04.2014 DE 102014206365
(43) Veröffentlichungstag der Anmeldung: 08.02.2017
(73) Patentinhaber: BSH Hausgeräte GmbH, 81739 München (DE)
(72) Erfinder: ZUAZO RODRIGUEZ, Gianfranco Cesar, 10627 Berlin (DE); NAWROT, Thomas, 14167 Berlin (DE); GUND, Christoph, 69221 Dossenheim (DE)
(86) Internationale Anmeldenummer: PCT/EP2015/056504
(87) Internationale Veröffentlichungsnummer: WO 2015/150208

(56) Entgegenhaltungen:
- EP-A1- 2 341 179
- WO-A2-2008/132244
- DE-A1- 2 215 013
- FR-A- 1 007 335
- US-A- 2 881 995

## Beschreibung

Die Erfindung betrifft ein Haushaltsgerät umfassend ein über mehrere jeweils entropieelastische Stützkörper auf einer ebenen Basis angebrachtes Funktionsteil, welches Funktionsteil eine bezüglich der Basis vertikal ausgerichtete Systemachse aufweist und durch welches Funktionsteil eine Schwingung erzeugbar ist.

Ein solches Haushaltsgerät geht hervor aus der WO 2013/024127 A1. Dort ist ein Haushaltsgerät beschreiben, welches als Wäschetrockner ausgestaltet ist, welcher eine Wärmepumpe des Kompressor-Typs beinhaltet. Der der Wärmepumpe zugehörige Kompressor ist in einem Funktionsteil enthalten, in welches der Kompressor und eine elektrische Rotationsmaschine, die den Kompressor antreibt, integriert sind. Das Funktionsteil hat eine im Wesentlichen zylindrische Form mit einigen Anbauten, die der Befestigung des Funktionsteils auf der Basis, dem Anschluss eines Leitungssystems zur Zu- und Abführung eines in der Wärmepumpe zirkulierenden Kältemittels sowie dem Anschluss allfällig notwendiger elektrischer Leitungen dienen. Die Systemachse ist die Drehachse der den Kompressor treibenden elektrischen Rotationsmaschine; sie ist auch die Drehachse des Kompressors selbst, da dieser Kompressor als Rollkolbenkompressor ausgestaltet ist. Die Stützkörper sind Zylinder aus Elastomer, in welche metallische Befestigungseinrichtungen wie Bolzen und Muttern integriert sind.

Die Anbindung des Kompressors an die Basis gemäß WO 2013/024127 A1 ist relativ steif, wobei wesentliche Relativbewegungen des Kompressors zur Basis weitgehend ausgeschlossen sind. Damit werden zwar Schwingungen des Kompressors gegen die Basis unterbunden, es werden aber die vom Kompressor verursachten Schwingungen in die Basis und damit verbundene weitere Komponenten des Haushaltsgeräts wie ein Gehäuse eingeleitet. Dadurch können andere Komponenten im Gehäuse unerwünscht in Schwingungen versetzt und Dröhngeräusche hervorgerufen werden.

Das Dokument EP2341179 A1 offenbart ein Haushaltsgerät gemäß dem Oberbegriff des Anspruchs 1.

Demgemäß ist es die Aufgabe der Erfindung, ein Haushaltsgerät der eingangs definierten Gattung anzugeben, bei dem die Anbindung des Funktionsteils, insbesondere Kompressors, an die Basis weiterentwickelt ist.

Zur Lösung dieser Aufgabe angegeben wird ein Haushaltsgerät mit den Merkmalen des unabhängigen Patentanspruchs. Bevorzugte Weiterbildungen sind Gegenstände der abhängigen Patentansprüche, nachfolgender Beschreibung und beigefügter Zeichnung.

Erfindungsgemäß angegeben wird demnach ein Haushaltsgerät umfassend ein über mehrere jeweils entropieelastische Stützkörper auf einer ebenen Basis angebrachtes Funktionsteil, welches Funktionsteil eine bezüglich der Basis vertikal ausgerichtete Systemachse aufweist und durch welches Funktionsteil eine Schwingung erzeugbar ist. Dabei weist jeder Stützkörper eine jeweils zugehörige und parallel zur Systemachse ausgerichtete Körperachse und bezüglich dieser gerundete Querschnitte auf und ist unter Belassung von den Stützkörper umlaufendem Freiraum einseitig in einer konkaven, gerundeten Lagerfläche eines mit der Basis starr verbundenen, starren Gegenlagers gelagert.

Erfindungsgemäß wird demnach eine verbesserte Anbindung des Funktionsteils an die Basis geschaffen. Die dabei vorgesehene Kombination mit dem Stützkörper und der konkaven Lagerfläche bedingt eine Weichheit der Anbindung, die einerseits Schwingungen aufnehmen und absorbieren kann, und die andererseits variabel ist, wenn Schwingungen, die vom Funktionsteil in den Stützkörper gelangen, Amplituden erreichen, die den Freiraum zwischen dem Stützkörper und der Lagerfläche erreichen und überschreiten. In solchem Falle kann der Stützkörper keine weitgehend unbehinderte Schwingung mehr ausführen, sondern er legt sich nach Überbrückung des Freiraums an die Lagerfläche an. Dies führt dazu, dass die Weichheit der Anbindung reduziert, bzw. die Festigkeit der Anbindung vergrößert wird. Dieser Effekt geschieht aber nur in derjenigen Richtung, in der die Schwingung stattfindet; senkrecht zu dieser Richtung bleibt die Weichheit der Anbindung unverändert. Dies ist besonders vorteilhaft deshalb, weil dabei Rücksicht genommen wird auf die räumliche Verteilung der Schwingungsfähigkeit der Basis einerseits und auf räumliche Gegebenheiten, die ein Schwingen des Funktionsteils in unterschiedlichen Richtungen in unterschiedlichen Maßen erlauben mögen, andererseits.

Eine Weiterbildung der Erfindung besteht darin, dass jeder Stützkörper eine ihn in einer zur Körperachse senkrechten Ebene umlaufende Nut aufweist, in welche Nut eine mit dem Funktionsteil starr verbundene Lasche mit einer entsprechenden Ausnehmung eingeknüpft ist. So sind die Stützkörper unverlierbar mit dem Funktionsteil verbunden und können mit diesem auf die Lagerflächen der Gegenlager aufgesetzt und befestigt werden. Eine zusätzliche Weiterbildung sieht dann vor, dass jeder Stützkörper eine ihn entlang der Körperachse durchlaufende Bohrung aufweist und mittels eines Befestigungsteils, welcher die Bohrung durchdringt, an dem Gegenlager befestigt ist. Das Befestigungsteil kann dabei eine in das Gegenlager eingeschraubte Schraube sein. Auf diese Weise ist eine praktische und zweckmäßige, insbesondere leicht zu montierende und bevorzugte Implementierung der Erfindung beschrieben.

In einer anderen Weiterbildung der Erfindung ist vorgesehen, dass die Querschnitte jedes Stützkörpers bezüglich seiner Körperachse jeweils eine Form aufweisen, die ausgewählt aus den Formen oval und elliptisch. "Oval" entspricht einer Form, die im Wesentlichen aus Geradenstücken und Kreisbögen, insbesondere Halb- oder Viertelkreisbögen, zusammengesetzt ist, "elliptisch" einer Form, die im Wesentlichen eine Ellipse ist.

In einer weiteren Weiterbildung der Erfindung ist vorgesehen, dass jeder Stützkörper bezüglich seiner Körperachse rotationssymmetrisch ist. In Kombination mit der zuvor beschriebenen Weiterbildung ergeben sich dann Stützkörper, deren Formen im Wesentlichen Rotationsovalen oder Rotationsellipsoiden sind.

In noch einer anderen Weiterbildung ist vorgesehen, dass jede Lagerfläche rotationssymmetrisch ist. In Kombination zur zuvor beschriebenen Kombination ergibt sich dann eine Anordnung aus Stützkörper und zugehöriger Lagerfläche, die insgesamt rotationssymmetrisch ist. Diese besonders bevorzugte Kombination bietet demnach pro Stützkörper eine isotrope Anbindung des Funktionsteils an die Basis, wobei diese Isotropie aber im Falle des Auftretens anisotroper Schwingungen des Funktionsteils in eine an diese Schwingungen angepasste Anisotropie übergeht. Die Anbindung kann sich somit den einzelfällig auftretenden jeweiligen Schwingungen anpassen, ohne dass es eines zusätzlichen steuernden Eingriffs bedarf.

In einer zusätzlichen Weiterbildung der Erfindung ist das Material jedes Stützkörpers ein vulkanisierter Kautschuk. Diese weist entsprechend zusätzlicher Weiterbildung eine Härte zwischen 30 Shore-A und 80 Shore-A auf, insbesondere zwischen 40 Shore-A und 60 Shore-A.

Bei wieder einer anderen Weiterbildung der Erfindung ist das Funktionsteil eine elektrische Rotationsmaschine mit einer zugehörigen Rotationsachse, welche mit der Systemachse identisch ist, und weist eine von der elektrischen Rotationsmaschine antreibbare Gaskraftmaschine auf. Gemäß zusätzlicher Weiterbildung ist diese Gaskraftmaschine eine thermodynamische Rotationsmaschine und weist eine zugehörige Rotationsachse auf, die mit der Systemachse identisch ist. Gemäß weiterer zusätzlicher Weiterbildung ist diese Gaskraftmaschine ein Kompressor.

Bei erneut einer anderen Weiterbildung der Erfindung gehört die Gaskraftmaschine im Funktionsteil zu einer Wärmepumpe. Gemäß zusätzlicher Weiterbildung umfasst die Wärmepumpe ein weich an die Gaskraftmaschine angeschlossenes Leitungssystem. "Weich" bedeutet dabei, dass das Leitungssystem Schwingungen des Funktionsteils aufnimmt, ohne die Schwingungseigenschaften des Funktionsteils dabei wesentlich zu beeinflussen.

Bei einer weiteren Weiterbildung der Erfindung weist das Funktionsteil eine Masse zwischen 3 kg und 8 kg auf.

Nach einer anderen Weiterbildung der Erfindung ist das Haushaltsgerät ein Gerät zur Pflege von Wäschestücken. Besonders in Betracht kommt dabei ein solches Gerät, welches ein Wäschetrockner ist; dieser Wäschetrockner mag mit weiterem Vorzug eine Wärmepumpe beinhalten.

Bevorzugte Ausführungsbeispiele der Erfindung sind auch in den Figuren der beigefügten Zeichnung dargestellt, und sind nachfolgend auch detailliert erläutert. Es zeigen:
Fig. 1 ein Haushaltsgerät, welches als Wäschetrockner ausgestaltet ist;
Fig. 2 eine Teilansicht des Haushaltsgeräts gemäß Fig. 1;
Fig. 3 eine Ansicht eines auf Stützkörper und Gegenlager montierten Funktionsteils;
Fig. 4 eine Ansicht einer Basis mit Gegenlagern; und
Fig. 5 die Ansicht gemäß Fig. 4 mit einem montierten Stützkörper.

Einander entsprechende Komponenten in den Figuren der Zeichnung sind jeweils mit dem gleichen Bezugszeichen versehen, um Übersicht zu schaffen und Referenzen zu mehreren Figuren gemeinsam zu ermöglichen.

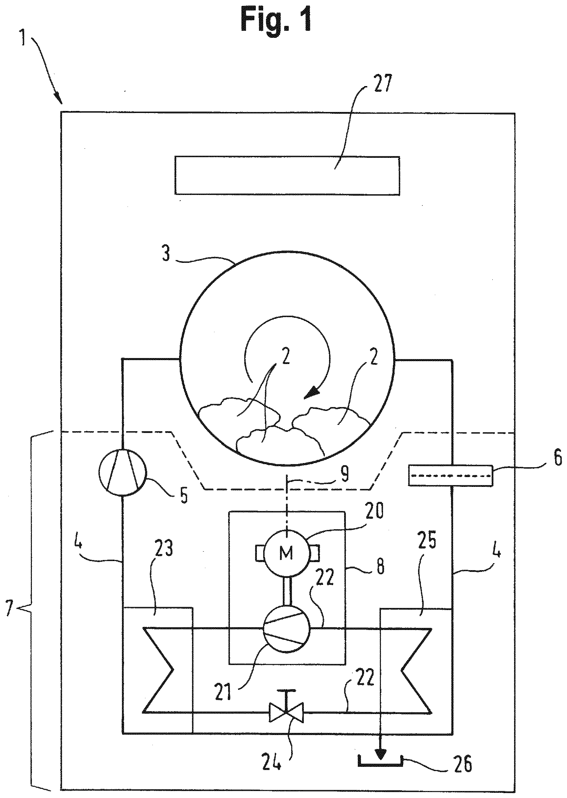

Figur 1 zeigt ein Haushaltsgerät 1, welches als Wäschetrockner 1 zum Trocknen feuchter Wäschestücke 2 ausgestaltet ist. Dazu ist in dem Haushaltsgerät 1 eine rotierbare Trommel 3 angeordnet, welche die Wäschestücke 2 aufnimmt. Durch die Rotation der Trommel 3 mittels eines der Übersicht halber nicht dargestellten Motors werden die Wäschestücke 2 in einem Strom erwärmter Prozessluft bewegt, damit diese Prozessluft die Feuchte aus ihnen aufnimmt und abführt. Dazu vorgesehen ist ein im wesentlichen in sich geschlossener Prozessluftkreislauf 4, in welchem die Prozessluft angetrieben von einem Prozessluftgebläse 5 zirkuliert und abwechselnd erwärmt und abgekühlt wird. Im Prozessluftkreislauf 4 vorgesehen ist auch ein Flusenfilter 6, mit welchem Splitter von Textilfasern und andere Partikel, die die Prozessluft den Wäschestücken 2 entreißt und die gewöhnlich als Flusen bezeichnet werden, aufgefangen werden, um nicht nachfolgende Teile im Prozessluftkreislauf 4 zu verschmutzen. Das Prozessluftgebläse 5, der Flusenfilter 6 und andere Teile des Prozessluftkreislaufs 4, zu denen nachfolgend Weiteres ausgeführt wird, sind in einer Basis 7 angeordnet, welche eine Bodengruppe 7 des Hausgeräts 1 bildet und welche als Träger aller weiteren Teile des Hausgeräts 1 fungiert. Die Trommel 3 ist oberhalb dieser Bodengruppe 7 angeordnet.

Auf einem ebenen Bereich der Bodengruppe 7 bzw. Basis 7, speziell auf einem Halteblech 7, das seinerseits fest mit der eigentlichen Bodengruppe verbunden ist, angebracht ist ein nachfolgend näher zu beschreibendes Funktionsteil 8, durch welches eine bezüglich einer vertikal zur Basis 7 ausgerichteten Systemachse 9 isotrope Schwingung erzeugbar ist. Die Basis 7 ist bezüglich der Systemachse 9 und senkrecht zu dieser anisotrop, was allerdings aufgrund der generell rechteckigen Gestalt der Basis 7 weitgehend selbstverständlich ist. Das Funktionsteil 8 ist dabei mittels Stützkörpern 10 und Gegenlagern 13, die in Figur 1 der Übersicht halber nicht dargestellt sind und bezüglich derer auf die weiteren Figuren der Zeichnung verwiesen wird, auf dem Halteblech 7 angebracht.

Ein Halteblech 7 ist hier vorgesehen, weil die eigentliche Bodengruppe aus Kunststoff gefertigt ist, eine direkte Verbindung des Funktionsteils 8 mit dem Kunststoff aber nicht erwünscht ist. Aufgrund einer festen Verbindung des Halteblechs 7 mit der übrigen Bodengruppe stellt dies aber im Hinblick auf die Behandlung von Schwingungsbelastungen, um die es vorliegend hauptsächlich geht, keine wesentliche Komplikation dar.

Im vorliegenden Fall weist das Funktionsteil 8 eine elektrische Rotationsmaschine 20 mit einer zugehörigen Rotationsachse, die mit der Systemachse 9 identisch ist, und eine von der elektrischen Rotationsmaschine 12 antreibbare Gaskraftmaschine 21, nämlich einen Kompressor 21 für ein in dem Wäschetrockner 1 zirkulierendes Kältemittel, auf. Diese Gaskraftmaschine 21 ist gemäß üblicher Praxis eine thermodynamische Rotationsmaschine 21, insbesondere eine Rollkolben-Maschine 21, und weist ihrerseits eine zugehörige Rotationsachse auf, die mit der Systemachse 9 identisch ist. Die Gaskraftmaschine 21 gehört dabei zu einer Wärmepumpe 21, 22, 23, 23, 25, mittels welcher die zum Trocknen der Wäschestücke 2 zirkulierende Prozessluft abwechselnd erwärmt und gekühlt wird. Dazu umfasst die Wärmepumpe 21, 22, 23, 24, 25 zusätzlich ein weich an die Gaskraftmaschine 21 angeschlossenes Leitungssystem 22, welches gegen seien Umgebung geschlossen ist und in dem das Kältemittel zirkuliert, sowie einen Verflüssiger 23, in welchem das durch den Kompressor 21 in gasförmigem Zustand komprimierte Kältemittel unter Abgabe von Wärme an die Prozessluft verflüssigt wird, ein Entspannungsorgan 24, insbesondere eine Blende, ein Ventil oder eine Kapillare, in welchem der Binnendruck des flüssigen Kältemittels isenthalp reduziert wird, wobei es teilweise wieder verdampft, und ein Verdampfer 25, in dem das Kältemittel unter Aufnahme von Wärme aus der Prozessluft vollständig verdampft wird. Weitere Komponenten des Leitungssystems 22 mögen vorhanden sein, insbesondere ein Speicher oder ein Reiniger, sind aber der Übersicht halber nicht dargestellt. Der Verflüssiger 23 dient als Wärmequelle 23 dazu, die zirkulierende Prozessluft aufzuheizen, bevor sie in die Trommel 3 eintritt und dort aus den zu trocknenden Wäschestücken 2 Feuchtigkeit aufnimmt. Im Verdampfer 25, der als Wärmesenke 25 dient, wird die aus der Trommel 3 ausgetretene, nun mit Feuchtigkeit beladene Prozessluft abgekühlt, so dass enthaltene Feuchtigkeit auskondensiert und im Kondensatsammler 26 gesammelt werden kann. Nachdem die Prozessluft den Verdampfer 25 durchströmt hat und von dem angefallenen Kondensat befreit ist, gelangt sie wiederum zum Verflüssiger 23, um erneut aufgeheizt und den zu trocknenden Wäschestücken 2 zugeführt zu werden.

Bei seinem Betrieb geht aufgrund interner Unwuchten von dem Funktionsteil 8 eine Schwingungsbelastung aus, die einer um die Systemachse 9 rotierenden Unwucht entspricht und dementsprechend bezüglich der Systemachse 9 weitgehend isotrop ist. Diese Schwingungsbelastung muss von einer geeigneten Anbindung des Funktionsteils 8 an die Basis 7 aufgefangen bzw. in die Basis 7 eingeleitet werden. Dabei ist insbesondere auf das Vorsehen einer geeigneten, also effektiv isotropen, Dämpfung zu achten. Gemäß üblicher Praxis hat das Funktionsteil 8 dabei eine Masse zwischen 3 kg und 8 kg.

Eine Steuereinrichtung 27 dient der Steuerung des Wäschetrockners 1 und seiner Komponenten, insbesondere einem (nicht dargestellten) Antrieb für die Trommel 3, das Gebläse 5 zum Fördern der zirkulierenden Prozessluft sowie des Antriebs 20 des Kompressors 21. Weitere Komponenten mögen mit der Steuereinrichtung 27 verbunden sein, so zum Beispiel verschiedene Sensoren, ein Programmspeicher, in welchem verschiedene Programme zum Trocknen vom Wäschestücken 2 nach Art der Textilien, aus denen sie bestehen etc., oder eine Kommunikationseinrichtung, über die der Wäschetrockner 1 an ein Kommunikationsnetz angeschlossen wäre, sowie Aktoren zum Verriegeln einer nicht dargestellten Tür, durch die die Trommel 3 zugänglich ist.

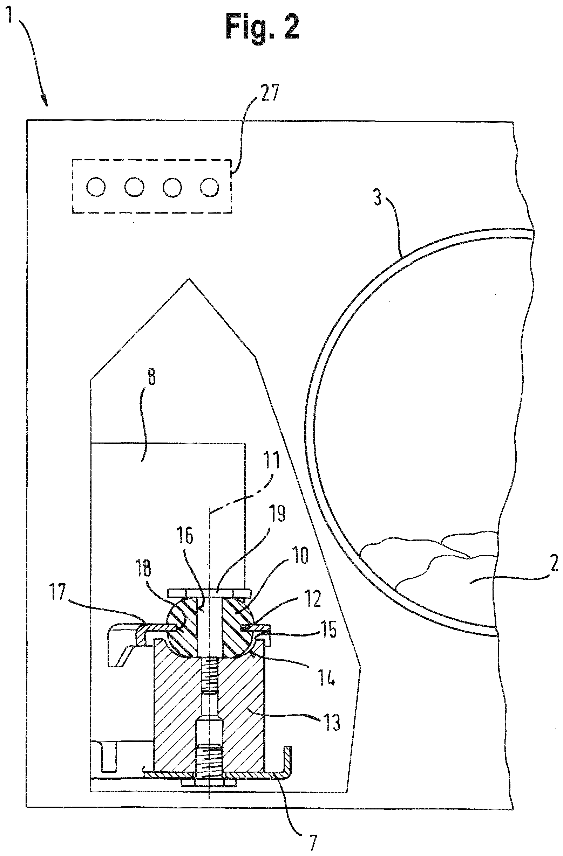

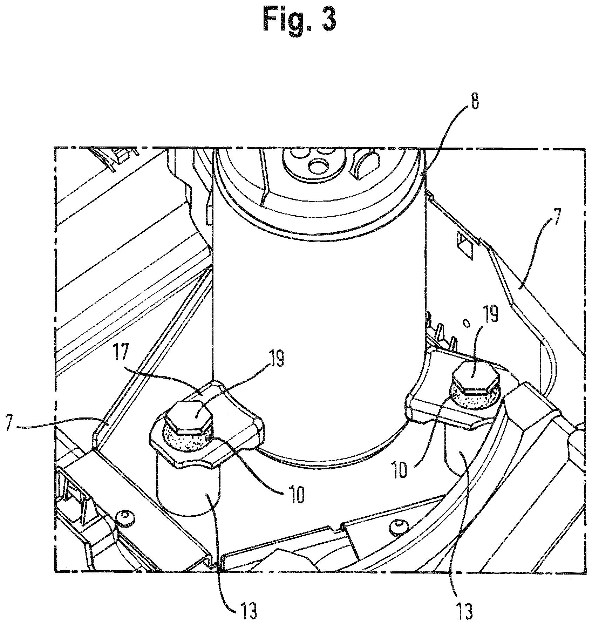

Die Figuren 2 bis 5 zeigen insbesondere Details der Stützkörper 10 und ihrer speziellen geometrischen Auslegung. Vorliegend geht es vor allem darum, dass jede Anordnung eines Stützkörpers 10 mit seinem Gegenlager 13 in sich isotrop ist, auf anisotrope Schwingungsbelastungen in unterschiedlichen Richtungen senkrecht zu seiner Körperachse 11 aber verschieden reagieren kann. Auf diese Weise können die Stützkörper 10 und die Gegenlager 13 dazu dienen, die von dem Funktionsteil 8 ausgehende, zunächst senkrecht zur Systemachse 9 isotrope Schwingungsbelastung derart in die an sich anisotrope Basis 7 einzuleiten, dass eine gleichmäßige, insbesondere isotrope, Verteilung der Schwingungsbelastungen in die Basis 7 erreicht wird.

Insbesondere zeigen die Figuren 2, 3, 4 und 5, dass jeder Stützkörper 10 um seine Körperachse 11 rotationssymmetrisch ist und senkrecht zu seiner Körperachse 11 einen ovalen oder elliptischen Querschnitt hat. Außerdem weist jeder Stützkörper 10 eine in einer Ebene senkrecht zu seiner Körperachse 11 umlaufende Nut 12 auf. Der Stützkörper 10 ruht auf seinem Gegenlager 13, einem weitgehend zylindrischen Körper, in einer konkaven und ebenfalls rotationssymmetrischen Lagerfläche 14. Wie insbesondere aus Fig.2 und der darin enthaltenen vergrößerten Ansicht erkennbar, gibt es zwischen dem Stützkörper 10 und der Lagerfläche 14 einen umlaufenden Freiraum 15 mit einem keilförmigen Querschnitt, in welchem sich der Stützkörper 10 beim Auftreten einer Schwingungsbelastung weitgehend frei verformen kann, bis der Freiraum 15 verschwindet. In solchem Falle kann der Stützkörper 10 keine weitgehend unbehinderte Schwingung mehr ausführen, sondern er legt sich nach Überbrückung des Freiraums 15 an die Lagerfläche 14 an. Dies führt dazu, dass sich der Stützkörper 10 nur noch in sich verformen kann und die Weichheit der Anbindung an die Basis 7 reduziert, bzw. die Festigkeit der Anbindung vergrößert wird. Dieser Effekt geschieht aber nur in derjenigen Richtung, in der die Schwingung stattfindet; senkrecht zu dieser Richtung bleibt die Weichheit der Anbindung unverändert. Dies ist besonders vorteilhaft deshalb, weil dabei Rücksicht genommen wird auf die räumliche Verteilung der Schwingungsfähigkeit der Basis 7 einerseits und auf räumliche Gegebenheiten, die ein Schwingen des Funktionsteils 8 in unterschiedlichen Richtungen in unterschiedlichen Maßen erlauben mögen, andererseits.

Der Stützkörper 10 hat eine innere Bohrung 16, die entlang der Körperachse 11 durch ihn hindurch verläuft und mit der der Stützkörper 10 auf dem Gegenlager 13 beweglich gehaltert ist. Mit der umlaufenden Nut 12 ist der Stützkörper 10 mit einer Lasche 17 verbunden, welche starr mit dem Funktionsteil 8 verbunden ist, indem er in eine entsprechende passende Ausnehmung 18 in der Lasche 17 eingeknüpft ist. Durch die Bohrung 16 ist eine Schraube 19 gesteckt, die in das Gegenlager 13 eingeschraubt ist und mit der der Stützkörper 10 auf dem Gegenlager 13 beweglich gehaltert ist.

Jeder Stützkörper 10 besteht aus einem entropieelastischen Material, insbesondere vulkanisiertem Kautschuk mit einer Härte zwischen 30 Shore-A und 80 Shore-A, die Härte eventuell eingeschränkt auf einen Bereich zwischen 40 Shore-A und 60 Shore-A.

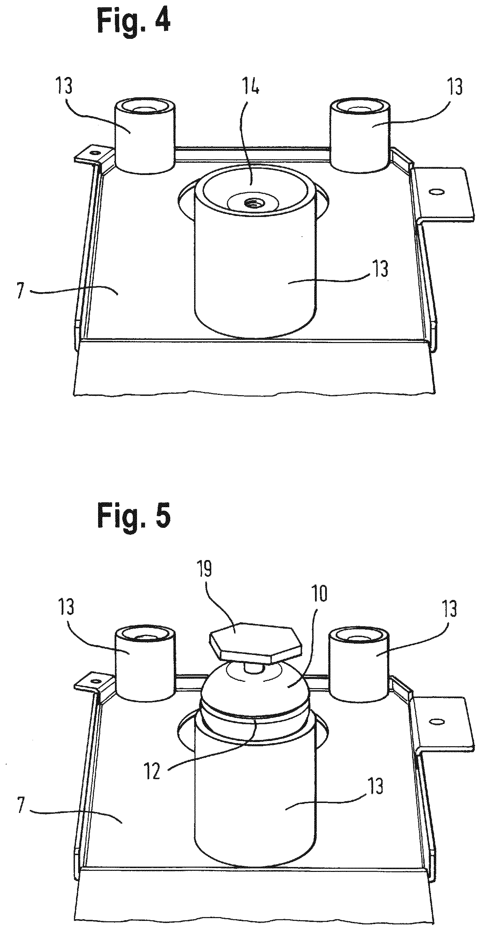

Wie dargestellt in den Figuren 4 und 5 sind die Gegenlager 13 auf dem Halteblech 8 starr befestigt, insbesondere mittels nicht dargestellter Schrauben. Für das eine Funktionsteil 8 sind drei Gegenlager 13 mit entsprechenden konkaven Lagerflächen 14 und entsprechende Stützkörper 10 sowie Laschen 17 vorgesehen. Figur 5 zeigt auf einem der Gegenlager 13 einen mit einer Schraube 19 befestigten Stützkörper 10 ohne die zugehörige Lasche 17. Auf diese Weise kann ein Ausgleich der Schwingungsbelastungen auch bei Vorliegen von Anisotropien erreicht und eine optimal schwingungsdämpfende Anbindung des Funktionsteils 8 an die Basis 7 erreicht werden.

### Bezugszeichenliste

- 1: Haushaltsgerät, Wäschetrockner
- 2: Wäschestück
- 3: Trommel
- 4: Prozessluftkreislauf
- 5: Prozessluftgebläse
- 6: Flusenfilter
- 7: Basis, Bodengruppe, Halteblech
- 8: Funktionsteil
- 9: Systemachse
- 10: Stützkörper
- 11: Körperachse
- 12: Nut
- 13: Gegenlager
- 14: Lagerfläche
- 15: Freiraum
- 16: Bohrung
- 17: Lasche
- 18: Ausnehmung
- 19: Befestigungsteil, Schraube
- 20: Elektrische Rotationsmaschine
- 21: Gaskraftmaschine, Kompressor
- 22: Leitungssystem
- 23: Wärmequelle, Verflüssiger
- 24: Entspannungsorgan
- 25: Wärmesenke, Verdampfer
- 26: Kondensatsammler
- 27: Steuereinrichtung

## Patentansprüche

1. Haushaltsgerät (1) umfassend ein über mehrere jeweils entropieelastische Stützkörper (10) auf einer ebenen Basis (7) angebrachtes Funktionsteil (8), welches Funktionsteil (8) eine bezüglich der Basis (7) vertikal ausgerichtete Systemachse (9) aufweist und durch welches Funktionsteil (8) eine Schwingung erzeugbar ist, wobei jeder Stützkörper (10) eine jeweils zugehörige und parallel zur Systemachse (9) ausgerichtete Körperachse (11) und bezüglich dieser gerundete Querschnitte aufweist **dadurch gekennzeichnet, dass** jeder Stützkörper (10) unter Belassung von den Stützkörper (10) umlaufendem Freiraum (15) einseitig in einer konkaven, gerundeten Lagerfläche (14) eines mit der Basis (7) starr verbundenen, starren Gegenlagers (13) gelagert ist.

2. Haushaltsgerät (1) nach Anspruch 1, bei dem jeder Stützkörper (10) eine ihn in einer zur Körperachse (11) senkrechten Ebene umlaufende Nut (12) aufweist, in welche Nut (12) eine mit dem Funktionsteil (8) starr verbundene Lasche (17) mit einer entsprechenden Ausnehmung (18) eingeknüpft ist.

3. Haushaltsgerät (1) nach Anspruch 2, bei dem jeder Stützkörper (10) eine ihn entlang der Körperachse (11) durchlaufende Bohrung (16) aufweist und mittels eines Befestigungsteils (19), welcher die Bohrung (16) durchdringt, an dem Gegenlager (13) befestigt ist.

4. Haushaltsgerät (1) nach Anspruch 3, bei dem das Befestigungsteil (19) eine in das Gegenlager (13) eingeschraubte Schraube (19) ist.

5. Haushaltsgerät (1) nach einem der vorigen Ansprüche, bei dem die Querschnitte jedes Stützkörpers (10) bezüglich seiner Körperachse (11) jeweils eine Form aufweisen, die ausgewählt aus den Formen oval und elliptisch.

6. Haushaltsgerät (11) nach einem der vorigen Ansprüche, bei dem jeder Stützkörper (10) bezüglich seiner Körperachse (11) rotationssymmetrisch ist.

7. Haushaltsgerät (1) nach Anspruch 6, bei dem jede Lagerfläche (14) rotationssymmetrisch ist.

8. Haushaltsgerät (1) nach einem der vorigen Ansprüche, bei dem das Material jedes Stützkörpers (10) ein vulkanisierter Kautschuk ist.

9. Haushaltsgerät (1) nach Anspruch 8, bei dem der Kautschuk eine Härte zwischen 30 Shore-A und 80 Shore-A aufweist.

10. Haushaltsgerät (1) nach Anspruch 9, bei dem der Kautschuk eine Härte zwischen 40 Shore-A und 60 Shore-A aufweist.

11. Haushaltsgerät (1) nach einem der vorigen Ansprüche, bei dem das Funktionsteil (8) eine elektrische Rotationsmaschine (20) mit einer zugehörigen Rotationsachse, welche mit der Systemachse (9) identisch ist, und eine von der elektrischen Rotationsmaschine (19) antreibbare Gaskraftmaschine (21) aufweist.

12. Haushaltsgerät (1) nach Anspruch 11, bei dem die Gaskraftmaschine (21) eine thermodynamische Rotationsmaschine (21) ist und eine zugehörige Rotationsachse aufweist, die mit der Systemachse (9) identisch ist.

13. Haushaltsgerät nach einem der Ansprüche 11 und 12, bei dem die Gaskraftmaschine (21) ein Kompressor (21) ist.

14. Haushaltsgerät (1) nach einem der Ansprüche 11 bis 13, bei dem die Gaskraftmaschine (21) zu einer Wärmepumpe (21, 22, 23, 24, 25) gehört.

15. Haushaltsgerät (1) nach Anspruch 14, bei dem die Wärmepumpe (21, 22, 23, 24, 25) ein weich an die Gaskraftmaschine (21) angeschlossenes Leitungssystem (22) umfasst, wobei weich bedeutet, daß das Leitungssystem Schwingungen des Funktionsteils aufnimmt, ohne die Schwingungseigenschaften des Funktionsteils dabei wesentlich zu beeinflussen.

16. Haushaltsgerät (1) nach einem der vorigen Ansprüche, bei dem das Funktionsteil (8) eine Masse zwischen 3 kg und 8 kg aufweist.

17. Haushaltsgerät (1) nach einem der vorigen Ansprüche, welches ein Gerät (1) zur Pflege von Wäschestücken (2) ist.

## Claims

1. Domestic appliance (1) comprising a functional part (8) attached to a flat base (7) by means of a plurality of entropically elastic supporting bodies (10), which functional part (8) has a system axis (9) that is oriented vertically in relation to the base (7) and by means of which functional part (8) vibration can be produced, wherein each supporting body (10) has an associated body axis (11) oriented parallel to the system axis (9) and rounded cross-section with respect to said body axis, **characterised in that** each supporting body (10) is supported at one end in a concave, rounded bearing surface (14) of a rigid counter bearing (13) rigidly connected to the base (7) in such a way that free space (15) extending around the supporting body (10) is left.

2. Domestic appliance (1) according to claim 1, in which each supporting body (10) has a groove (12) which extends around it in a plane at right angles to the body axis (11), in which groove (12) a lug (17) rigidly connected to the functional part (8) is attached to a corresponding recess (18).

3. Domestic appliance (1) according to claim 2, in which each supporting body (10) has a bore (16) which runs through along the body axis (11) and is fastened to the counter bearing (13) by means of a fastening part (19), which passes through the bore (16).

4. Domestic appliance (1) according to claim 3, in which the fastening part (19) is a screw (19) screwed into the counter bearing (13).

5. Domestic appliance (1) according to one of the preceding claims, in which the cross-sections of each supporting body (10) in relation to its body axis (11) has a form in each case which is selected from the forms oval and elliptical.

6. Domestic appliance (11) according to one of the preceding claims, in which each supporting body (10) is rotationally symmetrical in relation to its body axis (11).

7. Domestic appliance (1) according to claim 6, in which each bearing surface (14) is rotationally symmetrical.

8. Domestic appliance (1) according to one of the preceding claims, in which the material of each supporting element (10) is a vulcanized rubber.

9. Domestic appliance (1) according to claim 8, in which the rubber has a hardness between 30 Shore A and 80 Shore A.

10. Domestic appliance (1) according to claim 9, in which the rubber has a hardness between 40 Shore A and 60 Shore A.

11. Domestic appliance (1) according to one of the preceding claims, in which the functional part (8) has an electric rotary machine (20) with an associated axis of rotation, which is identical to the system axis (9) and a gas-powered engine (21) which can be driven by the electric rotary machine (19).

12. Domestic appliance (1) according to claim 11, in which the gas-powered engine (21) is a thermodynamic rotary machine (21) and has an associated axis of rotation which is identical to the system axis (9).

13. Domestic appliance according to one of claims 11 and 12, in which the gas-powered engine (21) is a compressor (21).

14. Domestic appliance (1) according to one of claims 11 to 13, in which the gas-powered engine (21) forms part of a heat pump (21, 22, 23, 24, 25).

15. Domestic appliance (1) according to claim 14, in which the heat pump (21, 22, 23, 24, 25) comprises a line system (22) connected smoothly to the gas-powered engine (21), wherein smoothly means that the line system absorbs vibrations of the functional part without significantly influencing the vibration properties of the functional part in the process.

16. Domestic appliance (1) according to one of the preceding claims, in which the functional part (8) has a mass of between 3 kg and 8 kg.

17. Domestic appliance (1) according to one of the preceding claims, which is an appliance (1) for the care of laundry items (2).

## Revendications

1. Appareil ménager (1) comprenant une pièce fonctionnelle (8) montée sur une base (7) plate par l'intermédiaire de plusieurs corps de support (10) respectivement à élasticité entropique, laquelle pièce fonctionnelle (8) présente un axe de système (9) orienté verticalement par rapport à la base (7) et au moyen de laquelle pièce fonctionnelle (8) une oscillation peut être générée, chaque corps de support (10) présentant un axe de corps (11) respectivement correspondant et orienté parallèlement à l'axe de système (9), et des sections transversales arrondies par rapport à celui-ci, **caractérisé en ce que** chaque corps de support (10), en laissant un espace libre (15) entourant le corps de support (10), est logé d'un côté dans une surface d'appui (14) concave arrondie d'une butée (13) rigide, reliée de manière rigide à la base (7).

2. Appareil ménager (1) selon la revendication 1, dans lequel chaque corps de support (10) présente une rainure (12) l'entourant dans un plan perpendiculaire à l'axe de corps (11), dans laquelle rainure (12) est attachée une languette (17) reliée de manière rigide à la pièce fonctionnelle (8), dotée d'un évidement (18) correspondant.

3. Appareil ménager (1) selon la revendication 2, dans lequel chaque corps de support (10) présente un trou (16) le traversant le long de l'axe de corps (11) et est fixé sur la butée (13) au moyen d'une pièce de fixation (19), laquelle traverse le trou (16).

4. Appareil ménager (1) selon la revendication 3, dans lequel la pièce de fixation (19) est une vis (19) serrée dans la butée (13).

5. Appareil ménager (1) selon l'une quelconque des revendications précédentes, dans lequel les sections transversales de chaque corps de support (10) par rapport à son axe de corps (11) présentent respectivement une forme qui est sélectionnée parmi les formes ovale et elliptique.

6. Appareil ménager (11) selon l'une quelconque des revendications précédentes, dans lequel chaque corps de support (10) est symétrique en rotation par rapport à son axe de corps (11).

7. Appareil ménager (1) selon la revendication 6, dans lequel chaque surface d'appui (14) est symétrique en rotation.

8. Appareil ménager (1) selon l'une quelconque des revendications précédentes, dans lequel la matière de chaque corps de support (10) est un caoutchouc vulcanisé.

9. Appareil ménager (1) selon la revendication 8, dans lequel le caoutchouc présente une dureté comprise entre 30 Shore A et 80 Shore A.

10. Appareil ménager (1) selon la revendication 9, dans lequel le caoutchouc présente une dureté comprise entre 40 Shore A et 60 Shore A.

11. Appareil ménager (1) selon l'une quelconque des revendications précédentes, dans lequel la pièce fonctionnelle (8) présente une machine de rotation (20) électrique dotée d'un axe de rotation correspondant, lequel est identique à l'axe de système (9), et une machine à force de gaz (21) entraînable par la machine de rotation (19) électrique.

12. Appareil ménager (1) selon la revendication 11, dans lequel la machine à force de gaz (21) est une machine de rotation (21) thermodynamique et présente un axe de rotation correspondant qui est identique à l'axe de système (9).

13. Appareil ménager (1) selon l'une quelconque des revendications 11 et 12, dans lequel la machine à force de gaz (21) est un compresseur (21).

14. Appareil ménager (1) selon l'une quelconque des revendications 11 à 13, dans lequel la machine à force de gaz (21) fait partie d'une pompe à chaleur (21, 22, 23, 24, 25).

15. Appareil ménager (1) selon la revendication 14, dans lequel la pompe à chaleur (21, 22, 23, 24, 25) comprend un système de conduites (22) raccordé de manière douce à la machine à force de gaz (21), de manière douce signifiant que le système de conduites absorbe les oscillations de la pièce fonctionnelle sans essentiellement influencer les propriétés oscillatoires de la pièce fonctionnelle.

16. Appareil ménager (1) selon l'une quelconque des revendications précédentes, dans lequel la pièce fonctionnelle (8) présente une masse comprise entre 3 kg et 8 kg.

17. Appareil ménager (1) selon l'une quelconque des revendications précédentes, lequel est un appareil (1) destiné à l'entretien de pièces de linge (2).
